# EUROPEAN PATENT SPECIFICATION

(11) **EP 1 697 792 B1**
(45) Date of publication and mention of the grant of the patent: **25.03.2009**
(21) Application number: 03819082.3
(22) Date of filing: 05.12.2003
(51) Int. Cl.: G02F 1/335, G02B 6/00

(54) **A DISPLAY AND A METHOD OF PROVIDING A DISPLAY**
DISPLAY UND VERFAHREN ZUR BEREITSTELLUNG EINES DISPLAYS
ECRAN ET METHODE DE MISE A DISPOSTION D'ECRAN

(43) Date of publication of application: 06.09.2006
(73) Proprietor: Nokia Corporation, 00045 Espoo (FI)
(72) Inventor: KNUDSEN, Peter, Back, 1366 Copenhagen K (DK)
(74) Representative: Milanov, Nina Vendela Maria
(86) International application number: PCT/DK2003/000839
(87) International publication number: WO 2005/054936

(56) References cited:
- EP-A- 1 288 702
- JP-A- 2001 023 423
- US-A- 5 359 691
- US-A- 5 921 652
- US-A- 2002 172 039

## Description

The present invention relates to a display, such as a backlit LCD display, and a method of providing the display, which display takes up less space than conventional displays and may be provided with a large number of alternative shapes compared to the conventional displays.

In the prior art, LCD displays are backlit by providing the light from a direction perpendicular to the display and provided either in light guides guiding the light in the perpendicular direction, such as in EP-A-0 271 956, or guiding the light in a direction along the plane of the display and then directing the light out of the light guide and toward the display, such as in US-A-6,241,919, 4,799,771, 4,630,895, and JP-A-11305229.

The disadvantage of the first type of display, naturally, is the large depth of the display. The disadvantage of the latter type of display is the fact that either oblong light emitters must be provided providing light e.g. along a full side of the display, or small-area light emitters are provided along a side thereof, whereby either dark spots are provided between the light emitters on the display. The areas between the light emitters and the active area of the display are lost or left unused due to these areas not being Illuminated evenly.

Surface backlight assemblies including a light guide plate, one or more light emitters and one or more tapered light guides each extending between the light guide plate and at least one light emitter are known from US2002/0172039,JP2001023423,US5921652 and US5359691.

The object of the present invention relates to the facilitating of using the areas of the display which would be unevenly backlit. Such use could be for other electrical components.

Another object of the invention relates to the providing a more freely positioning of the light emitters in relation to a light transmissive display, such as a LCD display.

In a first aspect, the invention relates to a display as defined in claim 1.

In this context, a light transmissive display is normally a display through which light may be transmitted and in which elements are adapted to change colour or polarization in order for the transmitted light to change characteristics in accordance with the change of the elements. A display of this type is a Liquid Crystal Display, LCD.

In the present context, the overlapping of the light transmissive display and the plate is an overlap when projected on to a plane defined by the light transmissive display. Normally, the light transmissive display and the plate will be flat and the light guided by the plate will be guided at least substantially along the plane.

Naturally, bent shapes of the plate/ light transmissive display are quite possible and may be desired in a number of applications. In that situation, the plate and light transmissive display will still be parallel in that they will have corresponding shapes (normally equidistantly), such as two tubes having the same center axis. The only difference is that the light transmissive display has a non-flat shape. The plate will perform its function exactly as that of a plane plate (guide the light until it is to be directed toward the light transmissive display).

In the following, the area of the plate overlapping with the light transmissive display will be denoted an active area of the plate.

A large number of manners exist of having the light guiding plate direct the light therefrom and through the light transmissive display. The present invention is equally suited for all these manners.

In the present context, it is preferred that the tapered guides have the narrow portion at the light emitters and the wider portion at the plate. In this manner, the guides will facilitate the widening of the light beams from the light emitters toward the plate and thereby prevent loss of active area of the plate. Normally, the best introduction of the light is when it is introduced at least substantially parallel to the plane or direction of the plate at the position/side of light entry.

Naturally, the tapered guides may be flat and be positioned in a plane defined by the plate. Otherwise, they may have other shapes allowing positioning of the light emitters at more freely selectable positions.

The loss of active area of the plate may be reduced when the tapered light guides are adapted to introduce light into a predetermined side of the plate, the light guides, at the side of the plate, together extend at least 80%, such as at least 90%, preferably at least 95% of a length of the side of the plate. In this manner, the dark and useless areas of the plate between the areas of light entry at the side of the plate may be reduced.

In the present invention, the light guides are a single monolithic element, also the plate may form part of the monolithic element, and the surface of the monolithic element where two adjacent tapered light guides are joined is rounded. This rounded shape between these elements will avoid micro cracks, which may be formed due to thermal or physical stressing of the light guides.

In a preferred embodiment, the space between the tapered elements and/or the light emitters is used for e.g. holding/storing electrical elements.

In a preferred embodiment, each light emitter has a largest physical dimension being significantly shorter than a largest physical dimension of the plate. In this situation, the dimension is a dimension of the light emitting part, if the light emitter comprises other parts, such as a housing, connectors etc.

The largest physical dimension may be a diameter or a diagonal, and preferably this dimension of the plate is at least 10 times larger, such as at least 50 times larger, preferably at least 100 times larger than the largest dimension of the light emitter.

Thus, a suitable illumination may be obtained while still leaving room for e.g. other components or the like.

In this respect, preferably, the display comprises at the most 10 light emitters, such as at the most 5 light emitters, preferably at the most 3 light emitters. Due to the fact that the light emitters may be positioned more freely in respect of the plate, less light emitters may be used while still obtaining the desired illumination. Light emitters, such as LEDs are quite costly.

One of the advantages is that light emitters having a low divergence of the emitted beam need a larger distance to the plate in order to illuminate a given area. The present tapered light guides facilitate that without an excessive loss of area due to the area between the tapers still being useful.

In one embodiment, the light transmissive display and the plate each has a side facing the other, and wherein the side of the plate has an area not larger than 110% of the area of the side of the light transmissive display. Thus, the only surface loss of the plate is 10% or less. In this embodiment, a predetermined plate side facing the tapered light guides has a predetermined length, and a distance exists between the light emitters exceeding 25% of the length, such as a distance exceeding 50% of the length. Thus, a large distance may be obtained between the light emitters even though a small surface loss is obtained.

A second aspect of the invention relates to a mobile telephone comprising the above display. In mobile telephones, space is sparse, and the possibility of placing electronic elements between the light emitters is welcome as is the possibility of actually having a more freely positioning of the light emitters.

A third aspect of the invention relates to a method of producing a display as defined in claim 8.

In the following, the invention will be described in relation to the drawing, wherein:
- Figure 1 illustrates in a top view a prior art backlit LCD display,
- Figure 2 illustrates the display of Figure 1 from the side,
- Figure 3 illustrates an other prior art example not according to the invention in a top view,
- Figure 4 illustrates the prior art display of Figure 3 from the side,
- Figure 5 illustrates an embodiment according to the invention, and
- Figure 6 illustrates an other prior art example not according to the invention.

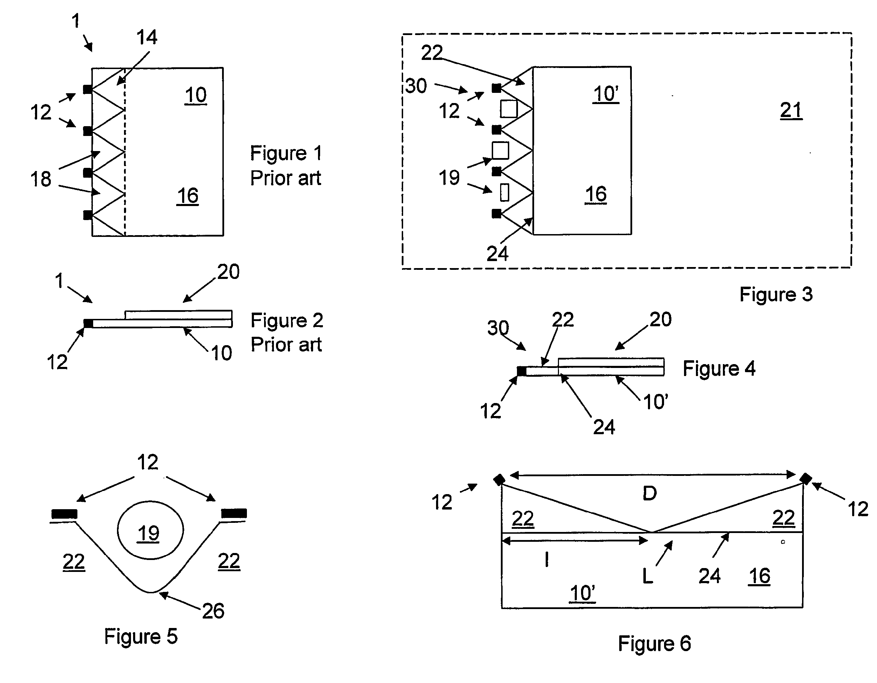

Figures 1 and 2 illustrate a prior art LCD display having the actual LCD 20 overlapping the back lighting light transmissive plate 10 which has an area extending outside the area of the LCD 20. In the present figure, 16 denotes the area of the plate 10 overlapping with the LCD (when projected onto a plane in which the plate 10 is). On an outer edge of the plate 10, four (as an example number) light emitters 12 are positioned so as to provide light into the plate 10 at that side.

It is clear that all types of light transmissive displays may be used in stead of the LCD.

However, due to the light emitting properties of the light emitters 12, black and bright spots or areas will be present in an area between the light emitters 12 and the area 16. This, actually, is the reason for the extra area.

The fans or tapers 14 illustrate the light emitted from the light emitters 12. It is seen that the areas 18 between the tapers 14 are dark and cannot be used for backlighting the LCD 20, wherefore the LCD is positioned only in the area 16 positioned sufficiently far from the light emitters 12 for it to be sufficiently evenly lit.

Figures 3 and 4 illustrate an other example not according to the invention where, for the sake of simplicity, the four light emitters 12 are again used, as is the case for the area 16 overlapping with the LCD 20. In this prior art example, however, the plate, now denoted 10', is smaller. In fact, the plate 10' may be made to exactly fit the area 16. Also, instead of the area with the bright/dark areas 14 and 18, tapered light guides 22 are provided which are adapted to receive the light from the light emitters 12 and guide it to the edge 24 of the plate 10'. In this manner, areas corresponding to the dark areas 18 of the prior art may be used for e.g. electronic components 19.

The electronic components 19 may be components normally used for controlling the LCD 20 or for other uses depending on the actual use of the display 30. Thus, when the display 30 is used in a mobile telephone, such as indicated by the square 21, the electronic components 19 may be components for use in other functionalities of the telephone 21.

In the prior art example, the plate 10' and tapers 22 may be made of light transmissive plastics, glass or any other light guiding material.

Naturally, the light emitting characteristics (such as the emitting angles etc) of the light emitters 12 and the tapering shape and angle of the tapers 22 will define the manner in which the light enters the plate 10' and, consequently, how the LCD 20 is backlit. However, these choices are quite simple. One example is to provide tapers 22 having a shape adapted to hold the full light emission of a light emitter 12 and being positioned so as to only guide the light as emitted without displacing the beam e.g. in other directions. This type of taper 22 will guide the light to the plate 10' in the same manner as the areas 14 in the plate 10. Another possibility is the use of the tapers 22 to actually form the light beams to be emitted into the plate 10'. Thus a better diffusion may be provided (such as by providing diffusing surfaces of the taper) or a desired spreading of the light may be provided by simply providing a taper with a mirror/lens functionality.

The plate 10' and the tapers 22 may be made as one monolithic element or may be made of individual elements assembled using e.g. the standard index matching glues or the like.

Figure 5 illustrates an embodiment of the present invention according to which the surface 24 of the monolithic light guide element where two adjacent tapers 22 are joined is rounded. This rounded shape 26 may be provided by simply moulding the tapers 22 or monolithic element in that manner or by a combined drilling/cutting action of the tapers 22 or the monolithic element. This rounded shape, it is contemplated, will prevent micro cracks in the elements due to thermal or physical stresses.

Figure 6 illustrates the versatility of another prior art example not according to the present invention in that only two light emitters 12 are used for illuminating the LCD. In this prior art display, the light emitters 12 are provided close to or at the extensions of two opposite edges of the plate 10' in order to provide more space for e.g. electrical components there between. The tapers 22 are adapted to ensure that the light emitted from the emitters 12 illuminates the whole area 16 in a sufficient manner.

It is clear that the light emitters 12 need a certain distance to the area 16 in order for their beams to expand sufficiently to illuminate the whole area 16. If made in accordance with Fig. 1, this would require a large unused area of the plate 10.

In this prior art display, it is seen that the distance, D, between the light emitters is equal to the length, L, of the edge 24. Also, it is seen that the physical dimensions of the light emitters 12, typically being provided as LED's, but which may just as well be light provided in any other manner and which may be provided to the positions 12 using e.g. optical fibres or the like, is much smaller than L.

Also, it is seen that when only two light emitters 12 or tapers 22 are used, the tapers 22, at the surface 24, are wider (each having the width I) so as to prevent dark spots in the plate 10'. In this manner, the area of the plate 10' may be identical to or close to the area 16.

Naturally, it is possible to use more than one light emitter 12 for each taper 22.

Thus, it is clear that the positions of the light emitters 12 may be chosen much more freely, and the tapers 22 may be used for guiding the light to the plate 10', while still providing the desired illumination of the LCD.

## Claims

1. A display device comprising:
a light transmissive display panel (20),
two more light emitters (12),
a light guiding plate (10) being at least substantially parallel with the light transmissive display panel (20) and at least partly overlapping the light transmissive display panel (20), the plate (10) being adapted to receive light from the emitters (12), guide the received light therein at least substantially in parallel to the light transmissive display panel (20), and to direct the light through the light transmissive display panel (20), the display device (20) further comprising
two or more tapered light guides (22) each extending between the plate (10) and one or more of the light emitters (12), each tapered light guide (22) being adapted to direct light from at least one light emitter (12) into the plate (10), wherein the tapered light guides (22) are a single monolithic element **characterized in that**
the surface of the monolithic element where two adjacent tapered light guides (22) are joined (26) is rounded.

2. A display device according to claim 1, wherein the tapered light guides (22) are adapted to introduce light into a predetermined side of the plate (10), the light guides (22), at the side of the plate (10), together extend at least 80%, such as at least 90%, preferably at least 95% of the length of the side of the plate (10).

3. A display device according to any of the preceding claims, further comprising electrical elements (19) positioned between the tapered elements (22) and/or the light emitters (12).

4. A display device according to any of the preceding claims, wherein each light emitter (12) has a largest physical dimension being significantly lower than the largest physical dimension of the plate (10).

5. A display device according to claim 4, comprising at the most 10 light emitters (12), such as at the most 5 light emitters (12), preferably at the most 3 light emitters (12).

6. A display device according to any of the preceding claims, wherein the light transmissive display panel (20) and the plate (10) each has a side facing the other, and wherein the side of the plate (10) has an area not larger than 110% of the area of the side of the light transmissive displayl panel (20), wherein a predetermined plate side facing the tapered light guides (22) has a predetermined length, and wherein a distance exists between the light emitters (12) exceeding 25% of the length, such as a distance exceeding 50% of the length.

7. A mobile telephone comprising the display device (30) of any of the preceding claims.

8. A method of producing a display device, the method comprising:
providing a light transmissive display panel (20),
providing a light transmissive plate (10) so as to overlap the light transmissive display panel (20) in a predetermined area of the plate (10),
providing two or more light emitters (12) adapted to emit light into the light transmissive plate (10), wherein the step of providing the plate (10) comprises
removing side parts (18) of the plate (10) so as to provide tapered parts (22) of the plate (10) constituting tapered light guides (22) between each group of one or more light emitters (12) and the predetermined area of the plate (10),**characterized in that**
the removal of the side parts (18) provides a rounded surface (26) of the plate (10) where two adjacent tapered light guides (22) are joined.

## Patentansprüche

1. Anzeigevorrichtung, welche umfasst:
ein lichtdurchlässiges Anzeigefeld (20),
zwei oder mehr Lichtstrahler (12),
eine lichtführende Platte (10), welche wenigstens im Wesentlichen parallel zu dem lichtdurchlässigen Anzeigefeld (20) ist und welche wenigstens teilweise mit dem lichtdurchlässigen Anzeigefeld (20) überlappt, wobei die Platte (10) ausgestaltet ist, Licht von den Lichtstrahlem (12) aufzunehmen, in sich das aufgenommene Licht wenigstens im Wesentlichen parallel zu dem lichtdurchlässigen Anzeigefeld (20) zu führen und das Licht durch das lichtdurchlässige Anzeigefeld (20) zu leiten, wobei die Anzeigevorrichtung auch umfasst:
zwei oder mehr spitz zulaufende Lichtführungen (22), wobei sich jede Lichtführung zwischen der Platte (10) und einem oder mehreren der Lichtstrahler (12) erstreckt, und wobei jede spitz zulaufende Lichtführung (22) ausgestaltet ist, Licht von wenigstens einem Lichtstrahler (12) in die Platte (10) zu leiten, wobei die spitz zulaufenden Lichtführungen (22) ein einziges zusammenhängendes Element sind, **dadurch** charakterisiert, dass
die Oberfläche des zusammenhängenden Elementes dort, wo zwei benachbarte spitz zulaufende Lichtführungen (22) verbunden sind (26), gerundet ist.

2. Anzeigevorrichtung gemäß Anspruch 1, wobei die spitz zulaufenden Lichtführungen (22) ausgestaltet sind, Licht in eine vorbestimmte Seite der Platte (10) einzuführen, wobei sich die Lichtführungen (22) auf der Seite der Platte (10) gemeinsam wenigstens über 80%, beispielsweise wenigstens über 90%, vorzugsweise wenigstens über 95% der Länge der Seite der Platte (10) erstrecken.

3. Anzeigevorrichtung gemäß einem der vorhergehenden Ansprüche, welche auch elektrische Elemente (19) umfasst, die zwischen den spitz zulaufenden Elementen (22) und/oder den Lichtstrahlem (12) platziert sind.

4. Anzeigevorrichtung gemäß einem der vorhergehenden Ansprüche, wobei jeder Lichtstrahler (12) eine größte physikalische Ausdehnung aufweist, die deutlich geringer ist als die größte physikalische Ausdehnung der Platte (10).

5. Anzeigevorrichtung gemäß Anspruch 4, welche höchstens 10 Lichtstrahler (12), beispielsweise höchstens 5 Lichtstrahler (12), bevorzugt höchstens 3 Lichtstrahler (12), umfasst.

6. Anzeigevorrichtung gemäß einem der vorhergehenden Ansprüche, wobei das lichtdurchlässige Anzeigefeld (20) und die Platte (10) jeweils eine Seite aufweisen, die sich zugewandt sind und wobei die Seite der Platte (10) eine Fläche aufweist, die nicht größer als 110% der Fläche der Seite des lichtdurchlässigen Anzeigefeldes (20) ist, wobei eine vorbestimmte Plattenseite, welche den spitz zulaufenden Lichtführungen (22) zugewandt ist, eine vorbestimmte Länge aufweist und wobei ein Abstand zwischen den Lichtstrahlern (12) besteht, welcher 25% der Länge überschreitet, beispielsweise ein Abstand, der 50% der Länge überschreitet.

7. Mobiltelefon, welches die Anzeigevorrichtung (30) gemäß einem der vorhergehenden Ansprüche umfasst.

8. Verfahren zum Herstellen einer Anzeigevorrichtung, wobei das Verfahren umfasst:
Vorsehen eines lichtdurchlässigen Anzeigefeldes (20),
Vorsehen einer lichtdurchlässigen Platte (10), so dass sie das lichtdurchlässige Anzeigefeld (20) auf einer vorbestimmten Fläche der Platte (10) überlappt,
Vorsehen zweier oder mehrerer Lichtstrahler (12), welche ausgestaltet sind, Licht in die lichtdurchlässige Platte (10) zu strahlen, wobei der Schritt des Vorsehens der Platte (10) ein Entfernen von Seitenteilen (18) der Platte (10) umfasst, so dass spitz zulaufende Teile (22) der Platte (10), welche spitz zulaufende Lichtführungen (22) bilden, zwischen jeder Gruppe einer oder mehrerer Lichtstrahler (12) und der vorbestimmten Fläche der Platte (10) gebildet werden, **dadurch** charakterisiert, dass
das Entfernen der Seitenteile (18) eine gerundete Oberfläche (26) der Platte (10) dort bildet, wo benachbarte spitz zulaufende Lichtführungen (22) verbunden sind.

## Revendications

1. Dispositif d'affichage, comprenant :
un panneau d'affichage à transmission lumineuse (20),
deux ou plusieurs émetteurs de lumière (12),
une plaque de guidage de lumière (10) étant au moins sensiblement parallèle au panneau d'affichage à transmission lumineuse (20) et chevauchant au moins partiellement le panneau d'affichage à transmission lumineuse (20), la plaque (10) étant adaptée pour recevoir de la lumière provenant des émetteurs (12), guider la lumière reçue dans celle-ci au moins sensiblement en parallèle au panneau d'affichage à transmission lumineuse (20), et diriger la lumière à travers le panneau d'affichage à transmission lumineuse (20), le dispositif d'affichage (30) comprenant en outre :
deux ou plusieurs guides de lumière tronconiques (22) dont chacun s'étend entre la plaque (10) et un ou plusieurs des émetteurs de lumière (12), chaque guide de lumière tronconique (22) étant adapté pour diriger la lumière d'au moins un émetteur de lumière (12) dans la plaque (10), dans lequel les guides de lumière tronconiques (22) forment un seul élément monolithique, **caractérisé en ce que**
la surface de l'élément monolithique sur laquelle deux guides de lumière tronconiques adjacents (22) sont reliés (26), est arrondie.

2. Dispositif d'affichage selon la revendication 1, dans lequel les guides de lumière tronconiques (22) sont adaptés pour introduire de la lumière dans un côté prédéterminé de la plaque (10), les guides de lumière (22) s'étendant ensemble au niveau du côté de la plaque (10) sur au moins 80%, par exemple sur au moins 90%, de préférence sur au moins 95% de la longueur du côté de la plaque (10).

3. Dispositif d'affichage selon l'une quelconque des revendications précédentes, comprenant en outre des éléments électriques (19) positionnés entre les éléments tronconiques (22) et/ou les émetteurs de lumière (12).

4. Dispositif d'affichage selon l'une quelconque des revendications précédentes, dans lequel chaque émetteur de lumière (12) a une plus grande dimension physique qui est significativement inférieure à la plus grande dimension physique de la plaque (10).

5. Dispositif d'affichage selon la revendication 4, comprenant au plus 10 émetteurs de lumière (12), par exemple 5 émetteurs de lumière (12) au plus, de préférence 3 émetteurs de lumière (12) au plus.

6. Dispositif d'affichage selon l'une quelconque des revendications précédentes, dans lequel le panneau d'affichage à transmission lumineuse (20) et la plaque (10) présentent chacun un côté orienté vers l'autre, et dans lequel le côté de la plaque (10) a une superficie inférieure ou égale à 110% de la superficie du côté du panneau d'affichage à transmission lumineuse (20), dans lequel un côté prédéterminé de la plaque orienté vers les guides de lumière tronconiques (22) a une longueur prédéterminée, et dans lequel il existe entre les émetteurs de lumière (12) une distance supérieure à 25% de la longueur, telle qu'une distance supérieure à 50% de la longueur.

7. Téléphone portable, comprenant le dispositif d'affichage (30) selon l'une quelconque des revendications précédentes.

8. Procédé de production d'un dispositif d'affichage, le procédé comprenant les étapes consistant à :
fournir un panneau d'affichage à transmission lumineuse (20),
fournir une plaque à transmission lumineuse (10) de manière à ce qu'elle chevauche le panneau d'affichage à transmission lumineuse (20) dans une surface prédéterminée de la plaque (10),
fournir deux ou plusieurs émetteurs de lumière (12) adaptés pour émettre de la lumière dans la plaque à transmission lumineuse (10), dans lequel l'étape consistant à fournir la plaque (10) comprend l'étape consistant à :
retirer des parties latérales (18) de la plaque (10) de sorte à fournir des parties tronconiques (22) de la plaque (10) constituant des guides de lumière tronconiques (22) entre chaque groupe d'un ou plusieurs émetteurs de lumière (12) et la surface prédéterminée de la plaque (10), **caractérisé en ce que**
le retrait des parties latérales (18) fournit une surface arrondie (26) de la plaque (10) où sont reliés deux guides de lumière tronconiques adjacents (22).
